# FASCICULE DE BREVET EUROPEEN

(11) **EP 3 728 792 B1**
(45) Date de publication et mention de la délivrance du brevet: **13.10.2021**
(21) Numéro de dépôt: 18842432.9
(22) Date de dépôt: 20.12.2018
(51) Int. Cl.: F01D 5/02, F16D 1/10

(54) **ENSEMBLE D'ARBRES POUR UNE TURBOMACHINE D'AÉRONEF**
WELLENANORDNUNG FÜR EIN FLUGTRIEBWERK
SHAFT ASSEMBLY FOR AN AIRCRAFT TURBINE ENGINE

(30) Priorité: 22.12.2017 FR 1763051
(43) Date de publication de la demande: 28.10.2020
(73) Titulaire: SAFRAN AIRCRAFT ENGINES, 75015 Paris (FR)
(72) Inventeur: NEGRI, Arnaud, Nicolas, 77550 MOISSY-CRAMAYEL (FR); BECOULET, Julien, Fabien, Patrick, 77550 MOISSY-CRAMAYEL (FR); BRAULT, Michel, Gilbert, Roland, 77550 MOISSY-CRAMAYEL (FR); KUBIAK, Guillaume, Patrice, 77550 MOISSY-CRAMAYEL (FR)
(74) Mandataire: Gevers & Orès
(86) Numéro de dépôt international: PCT/FR2018/053444
(87) Numéro de publication internationale: WO 2019/122741

(56) Documents cités:
- EP-A1- 1 927 774
- FR-A1- 2 918 726
- US-A1- 2015 323 014

## Description

### DOMAINE TECHNIQUE

La présente invention concerne un ensemble d'arbres pour une turbomachine d'aéronef.

### ETAT DE L'ART

L'état de l'art comprend notamment les documents EP-A1-1 927 774, US-A1-2015/323014 et FR-A1-2 918 726.

De manière classique, une turbomachine comprend un générateur de gaz et une soufflante située à une extrémité du générateur de gaz et entourée par un carter de soufflante. La soufflante est destinée à générer un flux d'air dont une partie alimente le générateur de gaz et forme un flux primaire, et une autre partie s'écoule entre le générateur de gaz et le carter de soufflante et forme un flux d'air secondaire qui génère une majeure partie de la poussée de la turbomachine.

Le générateur de gaz comporte, d'amont en aval dans le sens de l'écoulement des gaz, au moins un compresseur, une chambre de combustion et au moins une turbine. Le rôle du compresseur est d'accroître la pression de l'air fourni à la chambre de combustion. Le rôle de la turbine est d'assurer l'entraînement en rotation du compresseur en prélevant une partie de l'énergie de pression des gaz chauds sortant de la chambre de combustion et en la transformant en énergie mécanique.

Le compresseur et la turbine sont constitués d'un premier ensemble de pièces fixes constituant le stator et un second ensemble de pièces, susceptible d'être mis en rotation par rapport au stator, constituant le rotor.

Le rotor du compresseur et le rotor de la turbine forment un ensemble solidairement relié par un arbre tournant. La rotation du rotor par rapport au stator est rendue possible au moyen de paliers, un palier étant un organe mécanique supportant et guidant un rotor, en particulier l'arbre de ce rotor. Ce palier comporte une première partie fixée sur l'arbre rotor et une seconde partie fixée sur le stator par l'intermédiaire d'un support de palier. Un roulement est disposé entre les deux parties du palier autorisant ainsi la rotation d'une partie du palier par rapport à l'autre. Le roulement peut par exemple être de type à billes, à rouleaux cylindriques ou à rouleaux coniques.

Une turbomachine peut également être du type à « double-corps » ce qui signifie qu'elle comporte deux rotors agencés coaxialement. Un premier corps est appelé corps basse pression et un second corps est appelé corps haute pression. De façon connue, le générateur de gaz comporte dans ce cas, d'amont en aval, un compresseur basse pression, un compresseur haute pression, la chambre de combustion, une turbine haute pression et une turbine basse pression.

Dans le cas d'un turboréacteur à réducteur, l'arbre de turbine basse pression entraîne l'arbre de soufflante par l'intermédiaire d'un réducteur qui est lubrifié et logé dans une enceinte amont de lubrification. Selon le type de réducteur utilisé, planétaire ou épicycloïdal, l'arbre de soufflante va tourner dans le même sens ou dans le sens contraire à l'arbre de turbine, et l'arbre de soufflante va tourner à une vitesse moins importante que celle de l'arbre de turbine.

Afin de faciliter le montage et le démontage d'une turbomachine, il est préférable de la concevoir par modules. Les modules d'une turbomachine sont en général des ensembles de pièces qui sont fixés les uns aux autres. Les modules assurent les différentes fonctions de la turbomachine : compresseur, turbine, chambre de combustion, équipements, etc.

Dans le cas d'une turbomachine à réducteur, la turbomachine comprend un module amont comportant l'arbre de soufflante, des supports de paliers et le réducteur. Ce module amont est assemblé sur le compresseur basse pression pour former un module basse pression de la turbomachine, le module comprenant notamment une ligne d'arbres comportant l'arbre d'entrée du réducteur qui doit engrener avec le solaire du réducteur.

Le solaire du réducteur forme un arbre ou une portion d'arbre qui est destiné à être accouplé à cet arbre d'entrée par un engagement mâle/femelle à cannelures. En général, le solaire forme un arbre femelle à cannelures internes et l'arbre d'entrée forme un arbre mâle à cannelures externes. Les cannelures des arbres sont rectilignes et s'étendant le long de l'axe longitudinal de la turbomachine, si bien que les arbres sont engagés l'un dans l'autre par translation axiale des arbres l'un vers l'autre.

Le module amont précité est relativement lourd du fait notamment de la masse du réducteur qui peut atteindre 200kg voire plus. Dans le cas d'un assemblage à l'horizontale, le réducteur est en porte-à-faux au bout de l'arbre de soufflante et même si cet arbre est bien concentrique avec l'arbre d'entrée, le réducteur, du fait de sa masse, déforme légèrement l'arbre de soufflante, ce qui risque d'entraîner un désalignement du réducteur et de son arbre d'entrée. Ce phénomène peut être accentué ou généré par les jeux radiaux entre les dentures d'engrènement dans le réducteur.

Le montage qui paraît le plus simple pour éviter ce phénomène est d'assembler les modules à la verticale. Ainsi, la masse du réducteur ne risque plus de faire fléchir l'arbre de soufflante. Les jeux internes dans le réducteur auront également moins d'influence.

Lors de l'engagement de l'arbre mâle dans l'arbre femelle, il y a un risque d'endommagement des extrémités axiales en regard des cannelures si les cannelures mâles et femelles ne sont pas parfaitement positionnées les unes par rapport aux autres. Du fait de la masse du module amont, une translation de ce module, même à faible vitesse, génère une inertie qui pourra détériorer les zones de contact au niveau de ces extrémités. Ces zones de contact abimées peuvent plus facilement provoquer des amorces de criques ou des indications visuelles, ce qui pourrait entraîner davantage de travail d'inspection/validation ou de changement de pièces.

Dans certains cas, ces zones de contact ne sont pas facilement contrôlables. Il y a donc un risque d'abimer les cannelures et de ne pas pouvoir vérifier leur état après assemblage.

La présente invention propose un perfectionnement à cette technologie, qui est simple, efficace et économique, et permet de garantir un positionnement optimal des cannelures des arbres lors de leur insertion.

### EXPOSE DE L'INVENTION

L'invention propose un ensemble d'arbres pour une turbomachine d'aéronef, comportant un premier arbre externe et un second arbre interne, le premier arbre externe étant destiné à être engagé axialement sur le second arbre et comportant des cannelures longitudinales internes d'accouplement avec des cannelures longitudinales externes du second arbre, caractérisé en ce que :
- le premier arbre comprend, en amont des cannelures internes par rapport à la direction d'engagement, une rangée annulaire de dents internes de guidage, les dents internes étant alignées axialement avec des cannelures internes et ayant en section transversale une forme et des dimensions similaires à celles des cannelures internes, et
- le second arbre comprend, en amont des cannelures internes par rapport à la direction d'engagement, une rangée annulaire de dents externes de guidage, les dents externes étant alignées axialement avec des cannelures externes et ayant en section transversale une
forme et des dimensions similaires à celles des cannelures externes, et en ce que lorsque les premier et second arbres sont en position d'accouplement, les cannelures internes et externes sont engagées l'une dans l'autre et coopèrent entre elles dans une zone axiale d'accouplement, les dents internes et externes étant situées en dehors de cette zone d'accouplement.

On comprend dès lors que les dents sont prévues et conçues pour assurer le centrage des arbres lors de leur montage mais aussi pour subir préférentiellement les chocs et contraintes lors du montage. Si des chocs interviennent entre les arbres lors du montage, ils seront situés au niveau des dents qui s'abîmeront éventuellement. Ceci n'affectera toutefois pas la santé des arbres ni celle des cannelures car ces dents ne sont pas destinées à transmettre de couple entre les arbres. Leur fonction, de centrage, n'est utilisée que pendant le montage par insertion des arbres, et disparaît une fois que les arbres sont en position d'accouplement.

L'ensemble selon l'invention peut comprendre une ou plusieurs des caractéristiques suivantes, prises isolément les unes des autres ou en combinaison les unes avec les autres :
- lorsque les premier et second arbres sont en cours de montage l'un dans l'autre, leurs dents sont configurées pour coopérer par appui et glissement les unes avec les autres au début du montage pour assurer l'alignement axial des arbres et de leurs cannelures et éviter que des extrémités axiales en regard des cannelures viennent buter les unes contre les autres,
- les dents internes sont séparées axialement des cannelures internes du premier arbre d'une distance qui est inférieure à la dimension axiale des dents externes, et/ou les dents externes sont séparées axialement des cannelures externes du second arbre d'une distance qui est inférieure à la dimension axiale des dents internes,
- les dents internes comportent des bords périphériques chanfreinés du côté opposé aux cannelures internes, et/ou les dents externes comportent des bords périphériques chanfreinés du côté opposé aux cannelures externes,
- au moins un des arbres comprend un nombre de dents identique au nombre de ses cannelures,
- au moins un des arbres comprend un nombre de dents inférieur au nombre de ses cannelures,
- l'un des arbres comprend un nombre de dents inférieur au nombre de dents de l'autre des arbres,
- l'un des arbres comprend une rangée annulaire de dents régulièrement espacées les unes des autres d'un pas égal au double du pas entre ses cannelures ; ceci forme une variante spécifique de l'invention, ce pas dépendant fortement du nombre de dents des cannelures ; le nombre des dents peut être aménagé avantageusement de sorte à avoir toujours au moins trois contacts distincts entre les rangées de dents lors du montage, quelle que soit la position angulaire relative des arbres au début du montage ; par exemple, si on a une cannelure de plus de 150 ou 200 dents, on pourrait imaginer avoir des pas représentant l'encombrement de 5, 6 dents ou plus,
- l'autre des arbres comprend une rangée annulaire de paires de dents, les dents de chaque paire délimitant entre elles un espace de passage d'une dent de l'autre arbre.

La présente invention concerne également une turbomachine d'aéronef, comportant au moins un ensemble tel que décrit ci-dessus.

Avantageusement, les premier et second arbres sont un solaire de réducteur et un arbre basse pression ou deux arbres basse pression.

La présente invention concerne encore un procédé d'assemblage d'une turbomachine telle que décrite ci-dessus, comprenant les étapes consistant à :
- aligner les arbres l'un avec l'autre,
- rapprocher les arbres l'un de l'autre de façon à ce que les dents des arbres coopèrent par appui et glissement jusqu'à ce qu'elles soient positionnées pour permettre leur engagement les unes entre les autres, et que les cannelures des arbres soient alignées axialement de façon à pouvoir être emmanchées les unes dans les autres sans risque de contact, et
- déplacer les arbres l'un dans l'autre jusqu'à leur position d'accouplement, dans laquelle les cannelures coopèrent entre elles dans une zone axiale d'accouplement, les dents étant situées en dehors de cette zone et n'étant donc pas destinées à participer pas à la transmission d'un couple entre les arbres.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en coupe axiale d'une turbomachine d'aéronef ;
- la figure 2 est une vue schématique partielle en coupe axiale d'une turbomachine d'aéronef ;
- la figure 3 est une vue correspondant à celle de la figure 2 et illustrant une étape de montage de la turbomachine ;
- les figures 4 et 5 sont des vues schématiques en perspective des cannelures et des dents externes d'un arbre mâle selon l'invention ;
- les figures 6 et 7 sont des vues schématiques en perspective des cannelures et des dents internes d'un arbre femelle selon l'invention ;
- la figure 8 est une vue schématique en perspective et en coupe axiale d'un ensemble d'arbres selon l'invention ;
- la figure 9 est une vue schématique partielle en perspective de l'arbre mâle des figures 4 et 5 ;
- la figure 10 est une vue similaire à la figure 7 et illustrant une variante de réalisation de l'invention ; et
- les figures 11 et 12 sont des vues très schématiques des arbres et de leurs dents de guidage selon la variante de réalisation de la figure 10, et représentent deux positions angulaires différentes de l'arbre mâle vis-à-vis de l'arbre femelle.

### DESCRIPTION DETAILLEE

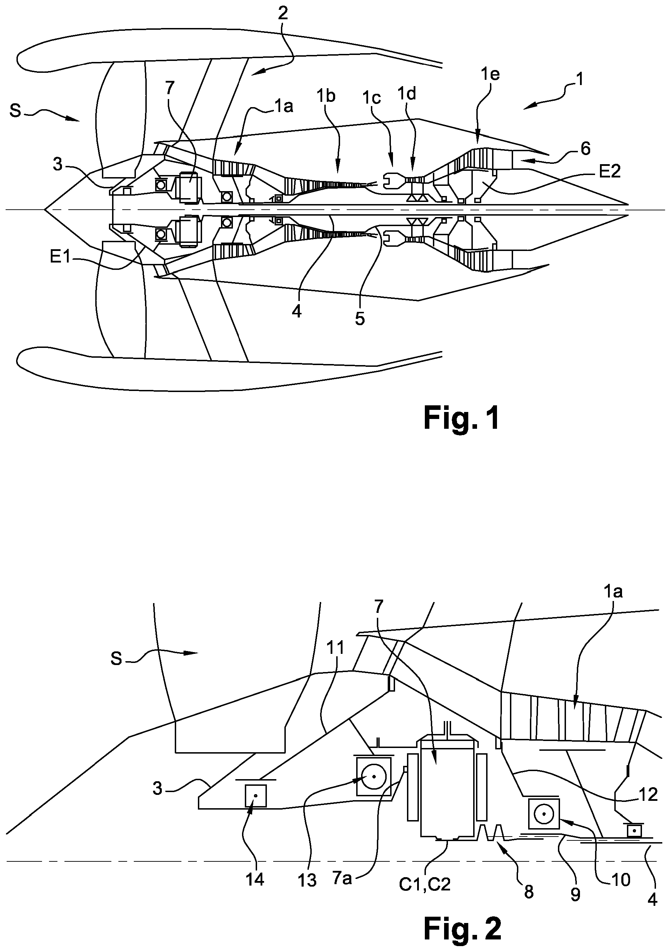

En se référant à la figure 1, on voit une turbomachine 1 à réducteur, qui comporte, de manière classique, une soufflante S, un compresseur basse pression 1a, un compresseur haute pression 1b, une chambre de combustion 1c, une turbine haute pression 1d et une turbine basse pression 1e. Les rotors du compresseur haute pression 1b et de la turbine haute pression 1d sont reliés par un arbre haute pression 5 et forment avec lui un corps haute pression (HP). Les rotors du compresseur basse pression 1a et de la turbine basse pression 1e sont reliés par un arbre basse pression 4 et forment avec lui un corps basse pression (BP). La soufflante est, quant à elle, portée par un arbre de soufflante 3 qui est relié par un réducteur 7 à l'arbre BP 4.

Les arbres HP et BP s'étendent suivant un axe qui est l'axe de rotation de la turbomachine 1. Dans la suite de la description, les notions de longitudinal ou radial, et d'intérieur ou extérieur, sont relatives à cet axe.

La turbomachine 1 comprend des carters structuraux. Le corps HP est tenu par deux carters structuraux : le carter inter-compresseurs et le carter inter-turbines, et le corps BP est tenu par au moins deux carters structuraux : le carter intermédiaire 2 et le carter inter-turbine et/ou le carter d'échappement 6.

Le carter intermédiaire 2 soutient des paliers de l'arbre de turbine BP 4 qui sont logés dans une enceinte avant ou amont notée E1. Le carter d'échappement 6 soutient des paliers de l'arbre de turbine BP 4 qui sont logés dans une enceinte arrière ou aval notée E2.

Les enceintes sont en général délimitées par des supports de paliers.

Le réducteur 7 est ici de type épicycloïdal. La figure 2 montre de manière très schématique l'encombrement du réducteur. Le réducteur 7 comprend un solaire qui est engrené avec les satellites et est accouplé par l'intermédiaire de cannelures C1, C2 avec un arbre 8 qui peut être considéré comme l'arbre d'entrée du réducteur. L'arbre 8 est entraîné par l'arbre BP 4 par l'intermédiaire d'un arbre 9 du compresseur BP qui est guidé par un palier 10 aval. En variante, les arbres 8 et 9 pourraient former un unique arbre monobloc.

Les arbres 8, 9 et 4 forment une ligne d'arbres BP. Le couple en sortie du réducteur 7 est transmis à l'arbre de soufflante 3, par une liaison classique, connue de l'homme du métier, comme par exemple une fixation de cet arbre de soufflante sur le porte-satellites formant un arbre de sortie 7a du réducteur, dans le cas d'un réducteur épicycloïdal. Dans le cas d'un réducteur planétaire, l'arbre de soufflante serait entrainé par la couronne. Le réducteur est placé à l'intérieur de l'enceinte avant E1 de lubrification.

L'enceinte E1 comprend des parois fixes et des parois mobiles. Les parois fixes de l'enceinte E1 comprennent une paroi interne de la veine du flux primaire, d'un support amont de palier 11 et d'un support aval de palier 12. Les supports 11 et 12 s'étendent vers l'intérieur de la turbomachine et portent respectivement les paliers 13, et le palier 10. Ils assurent la structure entre les carters et les bagues externes fixes des paliers. Les parois mobiles de l'enceinte E1 comprennent les arbres d'entrée 8 et de sortie 7a. Les paliers 10, 13, 14 sont logés dans l'enceinte E1. Des étanchéités, non visibles sur les schémas sont prévues entre les parois fixes et mobiles et sont par exemple des joints labyrinthe, joints à brosse, joint radiaux segmenté, etc.

Les paliers 10, 13 et 14 ainsi que le réducteur 7 sont lubrifiés pour leur bon fonctionnement. L'huile est amenée par des moyens appropriés tels que des gicleurs, des conduits d'amenée d'huile, etc. Les paliers 10, 14 sont situés aux extrémités axiales de l'enceinte E1. Le support de palier 11 comprend des trous de ventilation qui laissent passer de l'air de ventilation de l'enceinte. L'enceinte E1 est configurée pour que le mélange air-huile, qui forme un brouillard d'huile à l'intérieur de l'enceinte, soit contenu dans cette dernière. Entre les parois rotor et stator de l'enceinte, par exemple ici aux extrémités amont et aval de l'enceinte, des étanchéités (telles que des labyrinthes) sont placées pour contenir l'huile, et un circuit d'air vient pressuriser ces étanchéités pour éviter les fuites d'huile. L'enceinte E1 se trouve alors pressurisée (de l'air y entre en continu, repoussant l'huile qui aurait pu sortir des étanchéités par capillarité) et les paliers fonctionnent dans un milieu d'huile et d'air mélangés. L'alimentation des paliers est assurée par un tube d'alimentation et la récupération est assurée par un tube de récupération spécifique. Pour éviter une surpression de l'enceinte, et permettre un flux constant d'air entrant, l'intérieur de l'enceinte est mise à l'air à pression plus faible que la pression de l'air entrant dans les étanchéités. Cet air chargé de particules d'huile, qui est évacué au niveau d'un puits de pression, doit d'abord être traité pour récupérer la quasi-totalité de l'huile qu'il véhicule. Pour cela, l'air huilé sera amené à un déshuileur qui séparera l'air de l'huile qu'il véhicule et rejettera l'air déshuilé à l'extérieur du moteur. C'est le principe de déshuilage d'une enceinte.

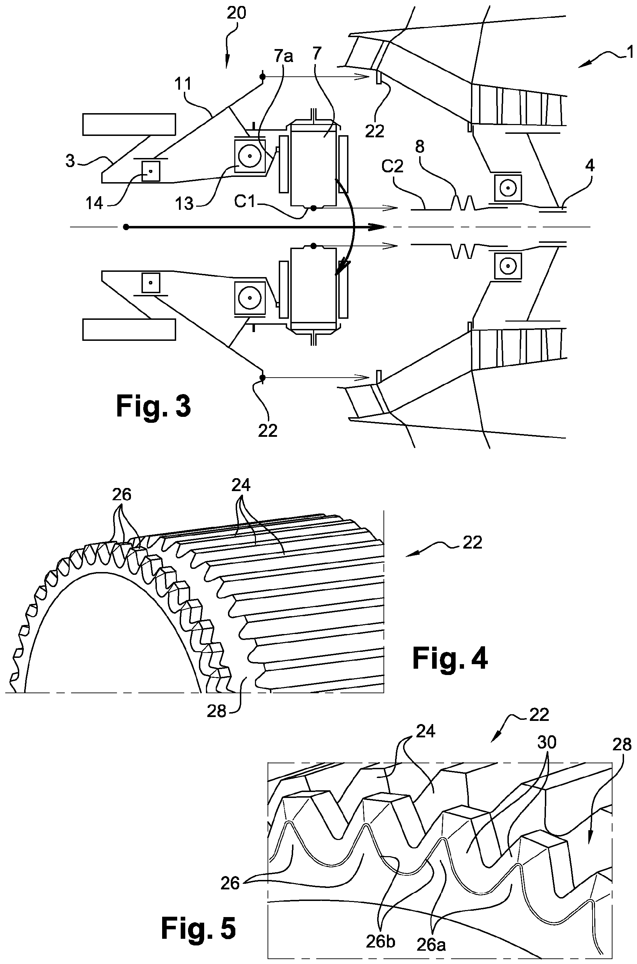

La figure 3 montre une étape d'assemblage de la turbomachine 1 dans laquelle un module amont 20 comportant l'arbre de soufflante 3, le support 11 des paliers 13, 14, et le réducteur 7, sont déplacés en translation le long de l'axe de la turbomachine jusqu'à l'accouplement de son solaire avec l'arbre 8.

Le solaire du réducteur est un arbre femelle à cannelures internes, et l'arbre 8 est un arbre mâle à cannelures externes. L'inverse est envisageable en variante. Les cannelures des arbres sont rectilignes et longitudinales. Elles sont complémentaires et destinées à coopérer les unes avec les autres pour assurer la transmission d'un couple entre l'arbre BP et le solaire du réducteur. Lorsque les arbres sont engagés l'un sur l'autre, le module amont 20 peut être fixé au reste de la turbomachine, par exemple par l'intermédiaire de brides annulaires de fixation 22 et de vis de serrage de ces brides. Le montage est préférentiellement réalisé avec l'axe de la turbomachine s'étendant à la verticale de façon à ce que le poids du réducteur ne fasse pas fléchir l'arbre de soufflante et de façon à mieux gérer les jeux internes du réducteur.

L'invention concerne plus particulièrement l'assemblage d'arbres par emmanchement mâle-femelle, les figures 1 à 3 et suivantes constituant un exemple d'application de cette invention.

Les figures 4, 5 et 9 représentent un arbre mâle 22, qui est l'arbre 8 dans l'exemple précité.

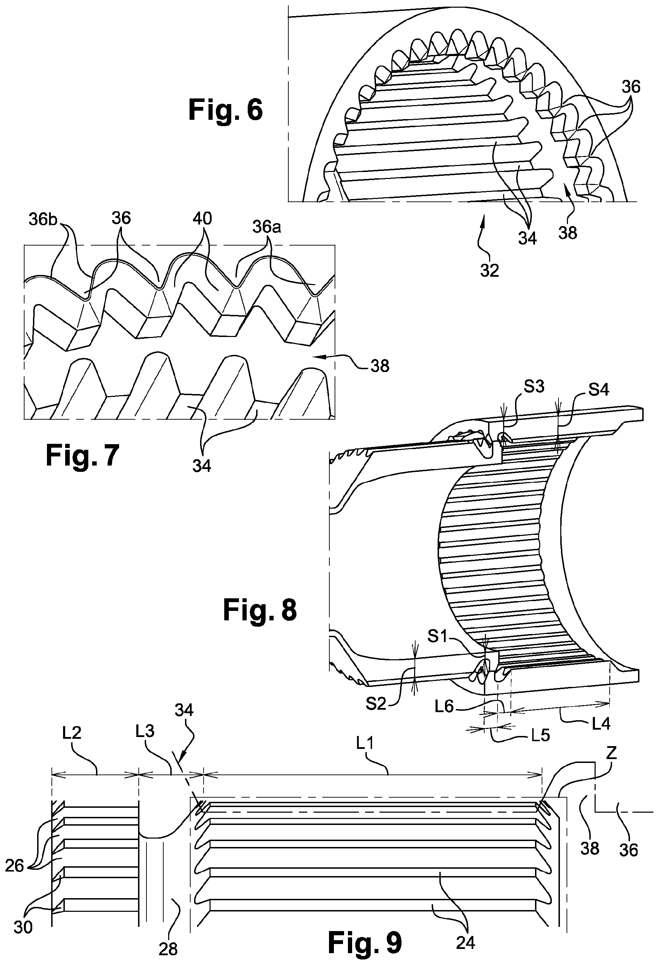

Cet arbre comprend des cannelures externes 24 rectilignes qui s'étendent sur une longueur notée L1. L'arbre 22 comprend en outre une rangée annulaire de dents externes 26 de guidage. Les dents externes 26 sont alignées axialement avec les cannelures externes 24 et ont en section transversale une forme et des dimensions similaires à celles des cannelures externes. Dans l'exemple représenté, les cannelures 34 ont en section une forme générale trapézoïdale (figure 5). Elles comportent chacune un sommet longitudinal plat s'étendant entre deux flancs latéraux préférentiellement plan, inclinés l'un par rapport à l'autre d'un angle compris entre 30 et 80°. Leurs extrémités longitudinales, respectivement amont et aval, sont en outre biseautées de façon à présenter des faces frontales et d'extrémité inclinées par rapport à des plans perpendiculaires à l'axe d'engagement des cannelures et passant par ces extrémités (figure 9).

Les dents 26 ont ici une longueur notée L2 et sont séparées axialement des cannelures 24 d'une distance notée L3. En pratique, les dents pourraient être obtenues en réalisant dans un premier temps des cannelures de longueur L1+L2+L3 puis en usinant une gorge annulaire 28 de longueur L2 pour séparer les cannelures définitives des dents de guidage.

Afin de limiter la masse des arbres, les sections inutiles de matière peuvent être limitées. Par exemple, la section en fond de gorge 28 peut être limitée au minimum suffisant pour tenir les dents 26. La section S1 en fond de gorge est par exemple au moins deux fois inférieure à la section S2 en fond de rainure inter-cannelures qui elle doit absorber le couple à transmettre (figure 8).

Comme cela est visible à la figure 5, les dents internes 26 comportent des bords périphériques chanfreinés 30 du côté opposé aux cannelures internes 24, qui facilitent en outre le positionnement respectif des arbres. Les bords chanfreinés 30 sont avantageusement reliés aux surfaces adjacentes, et en particulier aux faces frontales 26a des dents, par des congés de raccordement 26b afin de supprimer les arêtes vives et limiter les risques d'endommagement par contact. Les congés 26b se présentent sous la forme d'arrondis convexes (figure 5).

Comme c'est le cas des cannelures, les dents ont leurs extrémités amont biseautées de sorte que leurs faces frontales 26a sont inclinées par rapport à un plan perpendiculaire à l'axe d'engagement des cannelures (figure 9). Les extrémités aval sont ici non biseautées et comprennent des faces d'extrémités perpendiculaires à l'axe d'engagement.

Les angles des chanfreins sont déterminés pour favoriser le positionnement des pièces lors de la manœuvre d'emmanchement. La longueur et la forme des chanfreins, ainsi que la forme de la face frontale 26a des dents 26 (en triangle par opposition à la forme en trapèze des cannelures) permet de maximiser la probabilité d'engagement des dents de positionnement les unes par rapport aux autres sans choc frontal.

Les figures 6 et 7 représentent un arbre femelle 32, qui est le solaire du réducteur ou un arbre solidaire du solaire, dans l'exemple précité.

Cet arbre comprend des cannelures internes 34 rectilignes qui s'étendent sur une longueur notée L4. L'arbre comprend en outre une rangée annulaire de dents internes 36 de guidage. Les dents internes 36 sont alignées axialement avec les cannelures internes 34 et ont en section transversale une forme et des dimensions similaires à celles des cannelures externes. Dans l'exemple représenté, les cannelures 34 ont en section une forme générale trapézoïdale (figure 7). Elles comportent chacune un sommet longitudinal plat s'étendant entre deux flancs latéraux préférentiellement plan, inclinés l'un par rapport à l'autre d'un angle compris entre 30 et 80°. Leurs extrémités longitudinales, respectivement amont et aval, sont en outre biseautées de façon à présenter des faces frontales et d'extrémité inclinées par rapport à des plans perpendiculaires à l'axe d'engagement des cannelures et passant par ces extrémités (figures 8 et 9).

Les dents 36 ont ici une longueur notée L5 et sont séparées axialement des cannelures d'une distance notée L6. En pratique, les dents 36 pourraient être obtenues en réalisant dans un premier temps des cannelures 34 de longueur L4+L5+L6 puis en usinant une gorge annulaire 38 de longueur L5 pour séparer les cannelures définitives des dents de guidage.

La section S3 en fond de gorge 38 est par exemple au moins deux fois inférieure à la section S4 en fond de rainure entre deux cannelures internes 34 qui elle doit absorber le couple à transmettre (figure 8). De même, la section S1 en fond de gorge 28 est par exemple au moins deux fois inférieure à la section S3 en fond de rainure entre deux cannelures externes 24 qui elle doit absorber le couple à transmettre.

Comme cela est visible à la figure 7, les dents internes 36 comportent des bords périphériques 40 chanfreinés du côté opposé aux cannelures internes 34, qui facilitent en outre le positionnement respectif des arbres.

Les bords chanfreinés 40 sont avantageusement reliés aux surfaces adjacentes, et en particulier aux faces frontales 36a des dents, par des congés de raccordement 36b afin de supprimer les arêtes vives et limiter les risques d'endommagement par contact. Les congés 36b se présentent sous la forme d'arrondis convexes (figure 7). Comme c'est le cas des cannelures, les dents ont leurs extrémités amont biseautées de sorte que leurs faces frontales 36a sont inclinées par rapport à un plan perpendiculaire à l'axe d'engagement des cannelures (figure 8). Les extrémités aval sont ici non biseautées et comprennent des faces d'extrémités perpendiculaires à l'axe d'engagement.

Les angles des chanfreins sont déterminés pour favoriser le positionnement des pièces lors de la manœuvre d'emmanchement. La longueur et la forme des chanfreins, ainsi que la forme de la face amont ou d'attaque des dents 36 (en triangle par opposition à a forme en trapèze des cannelures) permet de maximiser la probabilité d'engagement des dents de positionnement les unes par rapport aux autres sans choc frontal.

Avantageusement, la distance ou longueur L2 est inférieure à la longueur L4, et la distance ou longueur L5 est inférieure à la longueur L1. Cela permet d'éviter aux dents d'un arbre de se retrouver libre de tourner dans la gorge de l'autre arbre, située entre les dents et les cannelures de cet autre arbre. Toutefois, L2 n'est pas nécessairement inférieure à L4 et L5 n'est pas nécessairement inférieure à L1.

Dans l'exemple représenté, ce qui permet d'éviter aux dents d'un arbre de se retrouver libre de tourner dans la gorge de l'autre arbre est:
- les dents internes 36 sont séparées axialement des cannelures internes 34 du premier arbre 32 d'une distance L6 qui est inférieure à la dimension axiale L2 des dents externes 26, et
- les dents externes 26 sont séparées axialement des cannelures externes 24 du second arbre 22 d'une distance L3 qui est inférieure à la dimension axiale L5 des dents internes 36.
Une seule de ces deux conditions est suffisante pour éviter aux dents d'un arbre de se retrouver libre de tourner dans la gorge de l'autre arbre.

La figure 8 montre une étape d'assemblage par insertion des arbres 22, 32. Les arbres sont alignés puis sont engagés l'un dans l'autre. Lors de la phase d'approche, les dents 26, 36 des arbres peuvent coopérer par appui et glissement de leurs bords chanfreinés 30, 40 jusqu'à ce qu'elles soient positionnées pour permettre leur engagement les unes entre les autres. Les cannelures 24, 34 des arbres sont alors alignées axialement de façon à pouvoir être emmanchées les unes dans les autres sans risque de contact, et les arbres peuvent être déplacés l'un dans l'autre jusqu'à leur position d'accouplement. Dans cette position, les cannelures coopèrent entre elles dans une zone axiale d'accouplement notée Z, qui a globalement une longueur de l'ordre de L1 ou L4 (figure 9). Les dents 24, 34 sont situées en dehors de cette zone et ne participent pas à la transmission de couple. Même si elles se sont abîmées lors du montage, elles ne risquent donc pas de générer de criques ou de fissures du fait qu'elles sont éloignées axialement de la zone Z.

Dans l'exemple représenté aux figures 4 à 9, le nombre de dents 24, 34 de l'arbre 22, 32 est identique au nombre de dents de l'autre arbre.

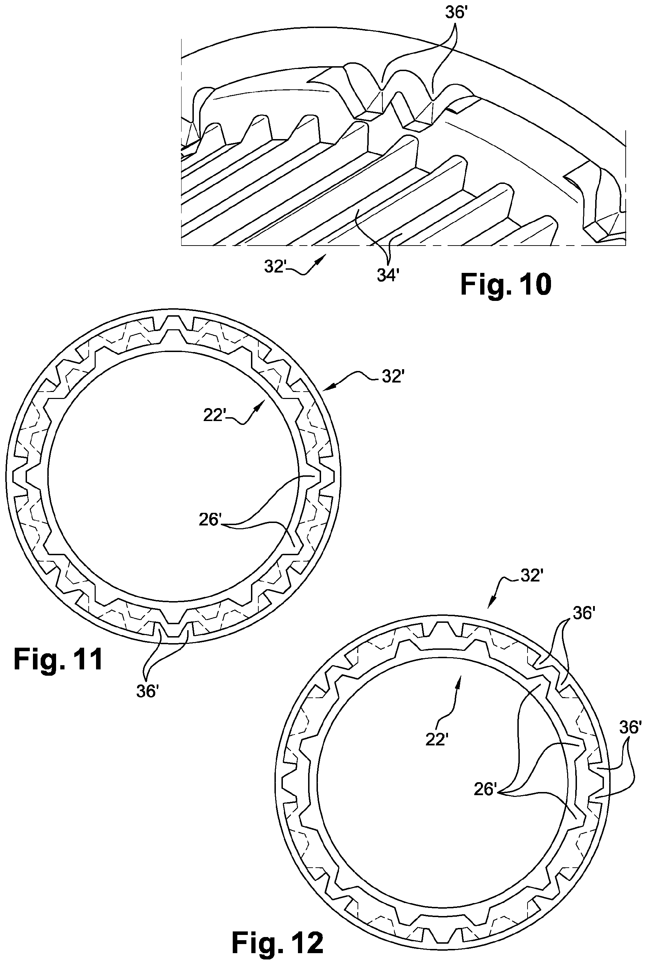

Dans la variante de réalisation des figures 10 à 12, les arbres 22', 32' ont un nombre de dents 26', 36' inférieur au nombre de leurs cannelures. L'arbre interne 22' a un nombre de dents 26' inférieur au nombre de ses cannelures et au nombre de dents 36' de l'arbre externe 32'. L'arbre 22' comprend une rangée annulaire de dents 26' régulièrement espacées les unes des autres d'un pas égal au double du pas entre ses cannelures.

L'arbre externe 32' a un nombre de dents 36' inférieur au nombre de ses cannelures 34'. L'arbre 32' comprend ici une rangée annulaire de paires de dents 36' consécutives, les dents de chaque paire délimitant entre elles un espace de passage d'une dent 26' de l'autre arbre. Le pas entre les dents 36' de chaque paire est égal au pas entre les cannelures 34' du même arbre.

Les cannelures 24, 34 sont configurées pour transmettre un couple important entre les arbres.

La limitation du nombre de dents 26', 36' permet de réduire l'impact de la présence des dents sur la masse des arbres 22', 32'. Les dents en trop peuvent être supprimées d'un arbre par usinage par exemple. Par ailleurs, dans le cas de l'arbre externe, comme une partie seulement des dents de chaque paire est destinée à coopérer avec une dent de l'autre arbre, qui est destinée à passer entre les dents de la paire, ces dents 36' peuvent être en partie supprimées pour alléger encore l'arbre 32'. Dans l'exemple représenté, seulement une moitié des dents 36' de chaque paire est conservée.

Les figures 11 et 12 montrent que, quelle que soit la position angulaire des arbres l'un par rapport à l'autre, il y aura toujours une série de dents de l'arbre interne qui passera entre des dents d'une paire de dents de l'arbre externe. Dans ces figures, les arbres ont été représentés très schématiquement en les espaçant radialement l'un de l'autre de manière exagérée, pour plus de clarté. Ces figures sont essentiellement utiles pour apprécier le nombre et la répartition des dents ainsi que leurs distributions autour de l'axe de la turbomachine.

Dans les exemples précités, chaque arbre comprend 24 cannelures. Ce nombre n'est bien entendu pas limitatif. Dans les figures 11 et 12, l'arbre 22' comprend 12 dents 26' et l'arbre 32' en comprend 18 moitiés de dents 36'.

Le nombre de dents 26', 36' n'est pas limitatif non plus. Le pas entre les dents dépend fortement du nombre de dents des cannelures. Le nombre de dents 26', 36' peut être aménagé avantageusement de sorte à avoir toujours au moins trois contacts distincts entre ces rangées de dents lors du montage, quelle que soit la position angulaire relative des arbres au début du montage. Par exemple, si on a une cannelure de plus de 150 ou 200 dents, on pourrait imaginer avoir des pas représentant l'encombrement de 5, 6 dents ou plus.

Dans le cadre de la présente invention, l'assemblage de la turbomachine comprend les étapes suivantes, préférentiellement de manière successive, les quatre premières étapes n'ayant qu'un caractère facultatif :
- assembler un module de compresseur basse pression incluant le compresseur basse pression 1a et le carter intermédiaire 2, l'arbre d'entrée 8, aux deux modules précédents.
- positionner le module de compresseur basse pression pour que l'arbre d'entrée 8 soit orienté verticalement.
- assembler un module de réducteur incluant le réducteur 7 au support palier 11, aux paliers de soufflante 13 et 14 et à l'arbre de sortie 7a.
- positionner le module de réducteur au-dessus du module de compresseur basse pression sans contact entre les modules.
- aligner les arbres 22, 32 l'un avec l'autre, qui sont ici l'arbre d'entrée 8 et l'arbre de sortie 7a.
- rapprocher les arbres l'un de l'autre de façon à ce que les dents 26, 36 des arbres coopèrent par appui et glissement jusqu'à ce qu'elles soient positionnées pour permettre leur engagement les unes entre les autres, et que les cannelures 24, 34 des arbres soient alignées axialement de façon à pouvoir être emmanchées les unes dans les autres sans risque de contact, et
- déplacer les arbres l'un dans l'autre jusqu'à leur position d'accouplement, dans laquelle les cannelures coopèrent entre elles dans une zone axiale d'accouplement Z, les dents 24, 34 étant situées en dehors de cette zone et n'étant donc pas destinées à participer à la transmission d'un couple entre les arbres. Cette position d'accouplement est représentée à la figure 9 où on constate que les dents 26, 36 sont situées de part et d'autre de la zone d'accouplement.

Dans le cas représenté à la figure 3 où les cannelures 34, 24 des arbres 22, 32 forment respectivement les cannelures C1 et C2 du solaire et de l'arbre 8, les étapes précitées permettent d'assembler le module de soufflante de la turbomachine, qui inclut le module compresseur basse pression et le module réducteur. Ce module est ensuite fixé à un module incluant le corps haute pression puis à un autre module incluant la turbine basse pression et l'arbre basse pression.

Le système d'accouplement décrit dans ce qui précède peut être utilisé pour l'accouplement de plusieurs paires d'arbres d'une turbomachine.

## Revendications

1. Ensemble d'arbres (22, 32) pour une turbomachine (1) d'aéronef, comportant un premier arbre externe (32) et un second arbre interne (22), le premier arbre externe étant destiné à être engagé axialement sur le second arbre et comportant des cannelures longitudinales internes (34) d'accouplement avec des cannelures longitudinales externes (24) du second arbre, **caractérisé en ce que** :
- le premier arbre comprend, en amont des cannelures internes par rapport à la direction d'engagement, une rangée annulaire de dents internes (36) de guidage, les dents internes étant alignées axialement avec des cannelures internes et ayant en section transversale une forme et des dimensions similaires à celles des cannelures internes, et
- le second arbre comprend, en amont des cannelures externes par rapport à la direction d'engagement, une rangée annulaire de dents externes (26) de guidage, les dents externes étant alignées axialement avec des cannelures externes et ayant en section transversale une forme et des dimensions similaires à celles des cannelures externes,
et **en ce que** lorsque les premier et second arbres sont en position d'accouplement, les cannelures internes et externes sont engagées l'une dans l'autre et coopèrent entre elles dans une zone axiale (Z) d'accouplement, les dents internes et externes étant situées en dehors de cette zone d'accouplement.

2. Ensemble selon la revendication 1, dans lequel, lorsque les premier et second arbres sont en cours de montage l'un dans l'autre, leurs dents sont configurées pour coopérer par appui et glissement les unes avec les autres au début du montage pour assurer l'alignement axial des arbres et de leurs cannelures et éviter que des extrémités axiales en regard des cannelures viennent buter les unes contre les autres.

3. Ensemble selon la revendication 1 ou 2, dans lequel les dents internes (36) sont séparées axialement des cannelures internes (34) du premier arbre (32) d'une distance (L6) qui est inférieure à la dimension axiale (L2) des dents externes (26), et/ou les dents externes (26) sont séparées axialement des cannelures externes (24) du second arbre (22) d'une distance (L3) qui est inférieure à la dimension axiale (L5) des dents internes (36).

4. Ensemble selon l'une des revendications 1 à 3, dans lequel les dents internes (36) comportent des bords périphériques chanfreinés (40) du côté opposé aux cannelures internes (34), et/ou les dents externes (26) comportent des bords périphériques chanfreinés (30) du côté opposé aux cannelures externes (24).

5. Ensemble selon l'une des revendications 1 à 4, dans lequel au moins un des arbres (22, 32) comprend un nombre de dents (26, 36) identique au nombre de ses cannelures (24, 34).

6. Ensemble selon l'une des revendications 1 à 4, dans lequel au moins un des arbres (22', 32') comprend un nombre de dents (26', 36') inférieur au nombre de ses cannelures (34').

7. Ensemble selon la revendication 6, dans lequel l'un des arbres (22') comprend un nombre de dents (26') inférieur au nombre de dents (36') de l'autre des arbres (32').

8. Ensemble selon la revendication 6 ou 7, dans lequel l'un des arbres (22') comprend une rangée annulaire de dents (26') régulièrement espacées les unes des autres d'un pas égal au double du pas entre ses cannelures.

9. Ensemble selon la revendication 8, dans lequel l'autre des arbres (32') comprend une rangée annulaire de paires de dents (36'), les dents de chaque paire délimitant entre elles un espace de passage d'une dent (26') de l'autre arbre (22').

10. Turbomachine (10) d'aéronef, comportant au moins un ensemble selon l'une des revendications précédentes.

11. Turbomachine selon la revendication 10, dans laquelle les premier et second arbres sont un solaire de réducteur et un arbre basse pression, ou deux arbres basse pression.

12. Procédé d'assemblage d'une turbomachine selon la revendication 11, comprenant les étapes consistant à :
- aligner les arbres (22, 32) l'un avec l'autre,
- rapprocher les arbres l'un de l'autre de façon à ce que les dents (26, 36) des arbres coopèrent par appui et glissement jusqu'à ce qu'elles soient positionnées pour permettre leur engagement les unes entre les autres, et que les cannelures (24, 34) des arbres soient alignées axialement de façon à pouvoir être emmanchées les unes dans les autres sans risque de contact, et
- déplacer les arbres l'un dans l'autre jusqu'à leur position d'accouplement, dans laquelle les cannelures coopèrent entre elles dans une zone axiale d'accouplement (Z), les dents (24, 34) étant situées en dehors de cette zone et n'étant donc pas destinées à participer pas à la transmission d'un couple entre les arbres.

## Patentansprüche

1. Wellenanordnung (22, 32) für eine Turbomaschine (1) eines Luftfahrzeugs, umfassend eine äußere erste Welle (32) und eine innere zweite Welle (22), wobei die äußere erste Welle dazu vorgesehen ist, auf der zweiten Welle axial in Eingriff genommen zu werden und innere Längsnuten (34) zur Kopplung mit äußeren Längsnuten (24) der zweiten Welle umfasst, **dadurch gekennzeichnet, dass**:
- die erste Welle, in Bezug auf die Eingriffsrichtung den inneren Nuten vorgelagert, eine ringförmige Reihe von inneren Führungszähnen (36) umfasst, wobei die inneren Zähne axial mit inneren Nuten ausgerichtet sind und im Querschnitt eine Form und ähnliche Dimensionen aufweisen wie die der inneren Nuten, und
- die zweite Welle, in Bezug auf die Eingriffsrichtung den äußeren Nuten vorgelagert, eine ringförmige Reihe von äußeren Führungszähnen (26) umfasst, wobei die äußeren Zähne axial mit äußeren Nuten ausgerichtet sind und im Querschnitt eine Form und ähnliche Dimensionen aufweisen wie die der äußeren Nuten,
und dadurch, dass, wenn die erste und die zweite Welle in einer Kopplungsposition sind, die inneren und die äußeren Nuten im Eingriff miteinander stehen und in einem axialen Kopplungsbereich (Z) zusammenwirken, wobei sich die inneren und die äußeren Zähne außerhalb dieses Kopplungsbereichs befinden.

2. Anordnung nach Anspruch 1, wobei während des Einbaus der ersten und der zweiten Welle ineinander deren Zähne so konfiguriert sind, um zu Beginn des Einbaus durch Aufliegen und Gleiten miteinander zusammenzuwirken, um die axiale Ausrichtung der Wellen und ihrer Nuten sicherzustellen und um zu verhindern, dass axiale Enden gegenüber den Nuten aneinander anstoßen.

3. Anordnung nach Anspruch 1 oder 2, wobei die inneren Zähne (36) axial von den inneren Nuten (34) der ersten Welle (32) um einen Abstand (L6) getrennt sind, der kleiner ist als die axiale Dimension (L2) der äußeren Zähne (26) und/oder die äußeren Zähne (26) axial von den äußeren Nuten (24) der zweiten Welle (22) um einen Abstand (L3) getrennt sind, der kleiner ist als die axiale Dimension (L5) der inneren Zähne (36).

4. Anordnung nach einem der Ansprüche 1 bis 3, wobei die inneren Zähne (36) abgefaste Umfangsränder (40) an der den inneren Nuten (34) entgegengesetzten Seite umfassen und/oder die äußeren Zähne (26) abgefaste Umfangsränder (30) an der den äußeren Nuten (24) entgegengesetzten Seite umfassen.

5. Anordnung nach einem der Ansprüche 1 bis 4, wobei mindestens eine der Wellen (22, 32) eine Anzahl von Zähnen (26, 36) umfasst, die identisch mit der Anzahl ihrer Nuten (24, 34) ist.

6. Anordnung nach einem der Ansprüche 1 bis 4, wobei mindestens eine der Wellen (22', 32') eine Anzahl von Zähnen (26', 36') umfasst, die kleiner als die Anzahl ihrer Nuten (34') ist.

7. Anordnung nach Anspruch 6, wobei eine der Wellen (22') eine Anzahl von Zähnen (26') umfasst, die kleiner ist als die Anzahl von Zähnen (36') der anderen der Wellen (32').

8. Anordnung nach Anspruch 6 oder 7, wobei eine der Wellen (22') eine ringförmige Reihe von Zähnen (26') umfasst, die in regelmäßiger Teilung, die gleich dem Doppelten der Teilung zwischen ihren Nuten ist, voneinander beabstandet sind.

9. Anordnung nach Anspruch 8, wobei die andere der Wellen (32') eine ringförmige Reihe von Paaren von Zähnen (36') umfasst, wobei die Zähne von jedem Paar untereinander einen Durchgangsraum eines Zahns (26') der anderen Welle (22') begrenzen.

10. Turbomaschine (10) eines Luftfahrzeugs, umfassend mindestens eine Anordnung nach einem der vorstehenden Ansprüche.

11. Turbomaschine nach Anspruch 10, wobei die erste und die zweite Welle ein Sonnenrad eines Untersetzungsgetriebes und eine Niederdruckwelle, oder zwei Niederdruckwellen sind.

12. Verfahren zum Zusammenbauen einer Turbomaschine nach Anspruch 11, umfassend die Schritte, die aus Folgendem bestehen:
- Ausrichten der Wellen (22, 32) zueinander,
- Annähern der Wellen zueinander derart, dass die Zähne (26, 36) der Wellen durch Aufliegen und Gleiten zusammenwirken, bis sie positioniert sind, um deren Eingriff ineinander zu ermöglichen und die Nuten (24, 34) der Wellen derart axial ausgerichtet sind, dass die einander eingefügt werden können, ohne die Gefahr, sich zu berühren, und
- Verschieben der Wellen ineinander bis zu deren Kopplungsposition, wobei die Nuten in einem axialen Kopplungsbereich (Z) miteinander zusammenwirken, wobei sich die Zähne (24, 34) außerhalb dieses Bereichs befinden und folglich nicht dazu vorgesehen sind, an der Übertragung eines Drehmoments zwischen den Wellen mitzuwirken.

## Claims

1. A shaft assembly (22, 32) for an aircraft turbomachine (1), comprising a first outer shaft (32) and a second inner shaft (22), the first outer shaft being intended to be engaged axially on the second shaft and comprising inner longitudinal splines (34) for coupling with outer longitudinal splines (24) of the second shaft, **characterized in that**:
- the first shaft comprises, upstream of the inner splines with respect to the direction of engagement, an annular row of inner guide teeth (36), the inner teeth being axially aligned with the inner splines and having in cross-section a shape and dimensions similar to those of the inner splines, and
- the second shaft comprises, upstream of the outer splines with respect to the direction of engagement, an annular row of outer guide teeth (26), the outer teeth being axially aligned with the outer splines and having in cross-section a shape and dimensions similar to those of the outer splines,
and **in that** when the first and second shafts are in the coupling position, the inner and outer splines are engaged in one another and cooperate with each other in an axial coupling area (Z), the inner and outer teeth being situated outside this coupling area.

2. Assembly according to claim 1, wherein, when the first and second shafts are being in progress mount one into the other, their teeth are configured to bear and slide in cooperation with each other at the beginning of the mounting to ensure axial alignment of the shafts and their splines and to prevent axial ends opposite to the splines from abutting against each other.

3. Assembly according to claim 1 or 2, wherein the inner teeth (36) are separated axially from the inner splines (34) of the first shaft (32) by a distance (L6) which is smaller than the axial dimension (L2) of the outer teeth (26), and/or the outer teeth (26) are separated axially from the outer splines (24) of the second shaft (22) by a distance (L3) which is smaller than the axial dimension (L5) of the inner teeth (36).

4. Assembly according to any one of claims 1 to 3, wherein the inner teeth (36) comprise chamfered peripheral edges (40) on the side opposite to the inner splines (34), and/or the outer teeth (26) comprise chamfered peripheral edges (30) on the side opposite to the outer splines (24).

5. Assembly according to any one of claims 1 to 4, wherein at least one of the shafts (22, 32) comprises a number of teeth (26, 36) identical to the number of its splines (24, 34).

6. Assembly according to any one of claims 1 to 4, wherein at least one of the shafts (22', 32') comprises a number of teeth (26', 36') smaller than the number of its splines (34').

7. Assembly according to claim 6, wherein one of the shafts (22') comprises a number of teeth (26') smaller than the number of teeth (36') of the other of the shafts (32').

8. Assembly according to claim 6 or 7, wherein one of the shafts (22') comprises an annular row of teeth (26') regularly spaced from each other by a pitch equal to twice the pitch between its splines.

9. Assembly according to claim 8, wherein the other of the shafts (32') comprises an annular row of pairs of teeth (36'), the teeth of each pair delimiting between them a space for the passage of a tooth (26') of the other shaft (22').

10. An aircraft turbomachine (10) comprising at least one assembly according to any one of the preceding claims.

11. Turbomachine according to claim 10, wherein the first and second shafts are a reduction sun gear and a low pressure shaft, or two low pressure shafts.

12. A method of assembling a turbomachine according to claim 11, comprising the steps of:
- aligning the shafts (22, 32) with each other,
- bringing the shafts closer to each other so that the teeth (26, 36) of the shafts cooperate by bearing and sliding until they are positioned to allow their engagement with each other, and the splines (24, 34) of the shafts are axially aligned so that they can be fitted into each other without risk of contact, and
- moving the shafts into each other to their coupling position, in which the splines cooperate with each other in an axial coupling area (Z), the teeth (24, 34) being situated outside this area and therefore not intended to participate in the transmission of a torque between the shafts.
